# EUROPEAN PATENT APPLICATION

(11) **EP 1 335 335 A2**
(43) Date of publication of application: **13.08.2003**
(21) Application number: 02255617.9
(22) Date of filing: 12.08.2002
(51) Int. Cl.: G07F 17/32

(54) **Lottery method, lottery program and interactive tv server device**

(30) Priority: 04.02.2002 JP 2002027046
(71) Applicant: Fujitsu Automation Limited, Kawasaki-shi, Kanagawa 211-8588 (JP)
(72) Inventor: Monzaki, Hiroki, Fujitsu systems engineering LMD, Sapporo-shi, Hokkaido 004-8550 (JP); Itagaki, Hajime, Sapporo-shi, Hokkaido 004-8550 (JP); Sato, Takashi, Sapporo-shi, Hokkaido 004-8550 (JP)
(74) Representative: Mohun, Stephen John

(57) **Abstract**

The present invention can provide an interactive TV server device, a lottery method and a lottery program. The interactive TV server device comprises; a clock unit tracking how much time has elapsed since invitations are sent out; a counter unit counting the number of applications received after the invitations have been sent out; and a lottery closing unit closing the lottery when a prescribed time limit or the maximum number of participants has been reached, and refusing all applications after this time. An applicant can improve his/her odds in the lottery in real time by continuing to participate in the lottery program. In this way, finally the audience rating of a program can be improved.

## Description

The present invention relates to a technology for improving the audience rating of an interactive TV program utilizing an interactive TV system and an internet TV system.

Conventionally, if in an interactive TV program, such as a quiz program with five quizzes, viewers apply for each quiz over a telephone or through a communication line. The losers of the first quiz and viewers failing to connect apply again for the lottery of the second and subsequent quizzes. In other words, a new application has to be made for each quiz.

Program participation by an interactive TV receiver also takes the same form as described above.

Furthermore, a quiz result, including whether a participant wins a quiz, is reported not only to the people concerned (participants and applicants), but is also broadcast to all viewers, including non-participants.

However, the conventional method described above reduces viewer's desire to participate due to the loss of interest in the program, caused by the trouble of applying each time or the frequent losses, which is a problem.

For example, since in the case of a telephone application, connection is seldom established (participation is seldom accepted) , the viewer's desire to participate is reduced (his/her interest in a program is lost).

Since an applicant for the first and subsequent quizzes (that is, a viewer that started watching from the beginning of a program) has no advantage over an applicant for the N-th and subsequent quizzes (that is, a viewer that started watching in the middle of a program), a viewer does not always want to watch from the beginning or often switches to another program in the middle, which is another problem.

Since the same information is reported to each participant, there are no customized interesting points in the notice (specifically, each applicant cannot view his/her odds in real time), which is another problem.

Embodiments of the present invention aim to provide an interactive TV server device, a feedback method and a feedback program, in order to improve a viewer's lottery odds in real time by continuing to participate in a lottery program, and hence to improve the audience rating of a program.

Another aim is to provide an interactive TV server device, a feedback method and a feedback program, in order to increase a viewer's desire to participate in a program by displaying the improvement process of the odds to each participant in a different form, and hence to improve the audience rating of the program.

One embodiment of interactive TV server device of the present invention broadcasts a TV program through a first network and receives information from interactive TV receivers receiving the program through a second network. The device comprises a participant invitation notification unit, a participation reception unit, a program reception confirmation unit, a clock unit, a counter unit and a lottery closing unit.

In a first aspect of the present invention, using a first network, the participant invitation notification unit sends an invitation to interactive TV receivers receiving a program, in which a lottery is being conducted.

Using a second network, the participation reception unit receives applications indicating intent to participate in the lottery and interactive TV receiver identifiers specifying the interactive TV receivers from the interactive TV receivers.

The program reception confirmation unit judges whether each interactive TV receiver identifier received by the participation reception unit is stored in a viewer table. The viewer table stores interactive TV receiver identifiers in accordance with interactive TV receivers receiving the program. If the required identifier is not stored in the table, the program reception confirmation unit stores the identifier in the viewer table.

The clock unit tracks how much time has elapsed since the invitations have been sent out.

The counter unit counts the number of applications received by the participation reception unit after the invitations have been sent out.

The lottery closing unit closes the lottery before the elapsed time counted by the clock unit reaches the prescribed time limit and before the number of participants counted by the counter unit reaches the prescribed maximum. After this time, it refuses all applications. Specifically, all applications are refused by storing viewer information about an interactive TV receiver identifier confirmed to be stored in the viewer table by the program reception confirmation unit in an application information table or storing viewer information about an interactive TV receiver identifier stored in the viewer table by the program reception confirmation unit.

The invention is defined in the attached independent claims, to which reference should now be made. Preferred features may be found in the subclaims appended thereto.

Preferred embodiments of the present invention will now be described, by way of example only, with reference to the accompanying drawings, in which:
Fig. 1 shows the configuration of the entire system, including an interactive TV server device in accordance with an embodiment of the present invention;
Fig. 2 shows an example data structure of the viewer table;
Fig. 3 shows an example data structure of the application information table;
Fig. 4 shows an odds selector indicating a correction value adjusting the odds;
Fig. 5 shows an item "content No." indicating the type of a display form used to graphically display the odds;
Fig. 6 shows a notification mechanism using a display interface;
Fig. 7 is a flowchart showing the process of adjusting the odds;
Fig. 8 shows a mechanism for improving the odds;
Fig. 9 is a flowchart showing the reception process of the interactive TV server device in accordance with an embodiment of the present invention;
Fig. 10 is a flowchart showing the lottery process of the interactive TV server device in accordance with an embodiment of the present invention;
Fig. 11 is a flowchart showing the notification process of the interactive TV server device in accordance with an embodiment of the present invention;
Fig. 12 shows an example display of a content (No. 1, when the odds are low);
Fig. 13 shows an example display of a content (No. 1, when the odds are improved);
Fig. 14 shows an example display of a content (No. 1, when a participant wins a lottery);
Fig. 15 shows an example display of a content (No. 2, when the odds are low);
Fig. 16 shows an example display of a content (No. 2, when the odds are improved);
Fig. 17 shows an example display of a content (No. 2, when a participant wins a lottery);
Fig. 18 shows the configuration of the interactive TV server device; and
Fig. 19 shows the loading of the program of the present invention onto a computer.

In order to solve the problems described earlier, embodiments of the present invention adopt the following configuration.

First, when the loss of a lottery is directly reported to a viewer, the viewer decides whether to enter the subsequent lottery. If the viewer makes a re-entry, his/her viewer information as well as the number of refusals and losses is stored and his/her odds can be improved in accordance with these numbers.

When a viewer participates in an interactive TV program, his/her odds can be displayed on a screen for each viewer.

Specifically, by utilizing an interactive TV system and an internet TV system, a viewer' s application is made on the screen.

The receipt of the application is confirmed by the viewer on the screen and his/her reply is obtained. If there is no reply within a specific time period, it is judged that his/her application has been cancelled.

In the (N+1)-th lottery, a loser in the N-th lottery is managed separately from a new applicant for the (N+1)-th lottery and his/her odds are improved.

The improvement of the odds is reported to a loser and it is confirmed in real time whether he/she intends to apply again and his/her reply is obtained within a specific time period. If there is no reply, it is judged that his/her application has been cancelled.

By utilizing an interactive TV system and an Internet TV system, each viewer is provided with a different notice in real time. For the notification method, a method enabling a viewer to visually enjoy the notice is used. For example, a mechanism notifying a viewer of the adjusted odds using a content is prepared.

For the content, a content corresponding to the odds is used for each odds.

In accordance with the improvement of viewer's odds, the content screen changes and the improvement is reported to a viewer. The content screen changes towards a specific object (goal) (by improving a probability, a goal is approached).

In this case, this change of a content screen can also be used for a sponsor's commercial by inserting information about a program sponsor into the content.

For examples of the content, a genre of Japanese history, such as "Jomon era→...→Kamakura era→...→Edo era→...→Heisei" (detailed information about each era is displayed), a genre of automobiles in which a model name indicating detailed information about each car grades up as a goal (winning) is approached, a genre of mountains in which a mountain name indicating the scenery of the mountain grades up as a goal (winning) is approached and the like can be used.

For the output of the content, a display interface for visualization is prepared and a goal (winning) position is displayed. Such an interface also clearly indicates how close the goal is, for example, the goal is approached in accordance with the viewer's current odds.

Specifically, according to one aspect of the present invention, the interactive TV server device of the present invention broadcasts a TV program through the first network and receives information from interactive TV receivers receiving the program through the second network. The device comprises: a participant invitation notification unit sending an invitation to interactive TV receivers receiving the program, in which a lottery is being conducted; a participation reception unit receiving applications indicating intent to participate in the lottery and interactive TV receiver identifiers specifying the interactive TV receivers from the interactive TV receiver using the second network; a program reception confirmation unit judging whether each interactive TV receiver identifier received by the participation reception unit is stored in the viewer table that stores interactive TV receiver identifiers in accordance with interactive TV receivers receiving the program and stores the received identifier in a viewer table, if the identifier is not stored in the table; a clock unit tracking how much time has elapsed since the invitations notice had been sent out; a counter unit counting the number of applications received by the participation reception unit after the invitations have been sent out; and a lottery closing unit closing the lottery by storing viewer information about interactive TV receiver identifiers confirmed to be stored or stored in the viewer table by the program reception confirmation unit in an application information table before the elapsed time counted by the clock unit reaches the prescribed time limit and before the number of participants counted by the counter unit reaches the prescribed maximum, and refusing all applications after this time.

It is preferable for the interactive TV server device of the present invention to further comprise a refusal notification unit notifying interactive TV receivers corresponding to interactive TV receiver identifiers confirmed to be stored or stored in the viewer table by the program reception confirmation unit that their applications have been refused before the elapsed time counted by the clock unit reaches the prescribed time limit and after the number of participants counted by the counter unit reaches the prescribed maximum.

It is also preferable for the interactive TV server device of the present invention to further comprise a lottery unit conducting a lottery according to viewer information stored in the application information table and a result notification unit notifying each interactive TV receiver corresponding to the viewer information stored in the application information table, of the result of the lottery conducted.

It is also preferable for the interactive TV server device of the present invention to further comprise a viewer status notification unit notifying each interactive TV receiver corresponding to the viewer information stored in the application information table, of the viewer status corresponding to the interactive TV receiver identifier.

It is also preferable for the application reception unit of the interactive TV server device of the present invention to be able to receive applications during the program in real time.

It is also preferable for the lottery closing unit of the interactive TV server device of the present invention to be able to rewrite an odds selector indicating the odds confirmed to be stored or stored in the viewer table corresponding to interactive TV receiver identifiers before the elapsed time counted by the clock unit reaches the prescribed time limit and after the number of participants counted by the counter unit reaches the prescribed maximum.

It is also preferable for the viewer status notification unit of the interactive TV server device of the present invention to be able to display the viewer status based on an odds selector indicating the odds confirmed to be stored or stored in the viewer table.

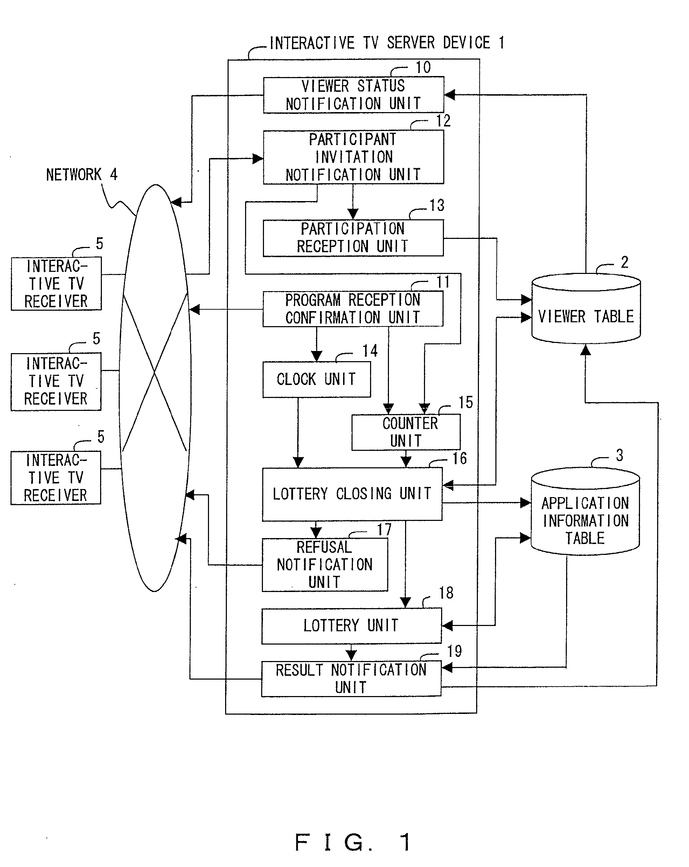

Fig. 1 shows the configuration of the entire system, including an interactive TV server device adopting the present invention.

In Fig. 1, the interactive TV server device 1 broadcasts a TV program through a network 4, for example, the first network, such as a TV broadcast communication network and the like. Then, the device 1 receives information from each interactive TV receiver receiving the program through another network 4', for example, the second network, such as a telephone line and the like.

The interactive TV server device 1 comprises a viewer status notification unit 10, a participant invitation notification unit 11, a participation reception unit 12, a program reception confirmation unit 13, a clock unit 14, a counter unit 15, a lottery closing unit 16, a refusal notification unit 17, a lottery unit 18 and a result notification unit 19.

The participant invitation notification unit 11 sends an invitation to interactive TV receivers 5 receiving a program, in which a lottery is being conducted during a TV program using the first network.

The participation reception unit 12 receives applications indicating intent to participate in a lottery and interactive TV receiver identifiers specifying the interactive TV receivers 5 from the interactive TV receivers 5 using the second network. The unit 12 can also receive the application during the program in real time.

The program reception confirmation unit 13 judges whether each interactive TV receiver identifier received by the participation reception unit 12 is stored in a viewer table 2. The viewer table stores each interactive TV receiver identifier corresponding to each interactive TV receiver 5 receiving the program. If the identifier is not stored in the viewer table 2, the unit 13 stores the received interactive TV receiver identifier in the viewer table 2.

The clock unit 14 tracks how much time has elapsed since the invitations had been sent out.

The counter unit 15 counts the number of applications received by the participation reception unit 12 after the invitations have been sent out.

The lottery closing unit 16 closes the lottery by storing viewer information about interactive TV receiver identifiers confirmed to be stored or stored in the viewer table 2 by the program reception confirmation unit 13 in an application information table 3 before the elapsed time counted by the clock unit 14 reaches the prescribed time limit and before the number of participants counted by the counter unit 15 reaches the prescribed maximum, and refusing all applications after this time.

The lottery closing unit 16 can also rewrite an odds selector indicating the odds confirmed to be stored or stored in the viewer table 2 by the program reception confirmation unit 13 in an application information table 3 before the elapsed time counted by the clock unit 14 reaches the prescribed time limit and after the number of participants counted by the counter unit 15 reaches the prescribed maximum.

The refusal notification unit 17 notifies interactive TV receivers 5 corresponding to interactive TV receiver identifiers confirmed to be stored or stored in the viewer table 2 by the program reception confirmation unit 13 before the elapsed time counted by the clock unit 14 reaches the prescribed time limit and after the number of participants counted by the counter unit 15 reaches the prescribed maximum, that their applications have been refused.

The lottery unit 18 conducts a lottery according to the viewer information stored in the application information table 3.

The result notification unit 19 notifies each interactive TV receiver 5 corresponding to each piece of viewer information stored in the application information table, of the result of the lottery conducted by the lottery unit 18.

The viewer status notification unit 10 notifies each interactive TV receiver 5 identified in the viewer information table 2, of the viewer status corresponding to each interactive TV receiver identifier. The unit 10 can also display the viewer status based on an odds selector indicating the odds stored in the viewer table 2.

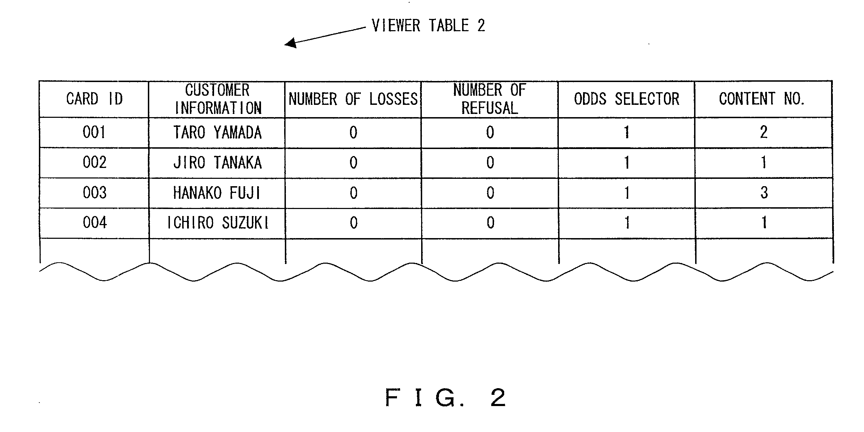

Fig. 2 shows an example data structure of the viewer table.

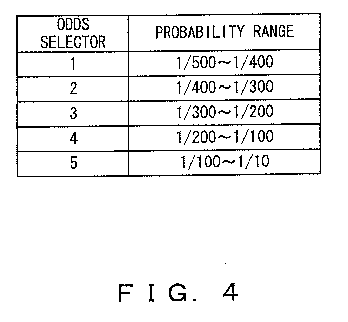

The viewer table has items "card ID" identifying a viewer terminal, such as an interactive TV receiver 5 and the like, "customer information" indicating the name of a customer viewing a TV program using an interactive TV receiver and the like, "number of losses" (its initial value is 0) indicating the number of losses in a lottery conducted in the same program, "number of refusals" (its initial value is 0) indicating the number of refusals in the lottery despite its application, "odds selector" (its initial value is 1, the details are described later with reference to Fig. 4) indicating a level value corresponding to its correction value adjusting the odds and "content No." indicating the type of a display form used when the odds are displayed using graphics.

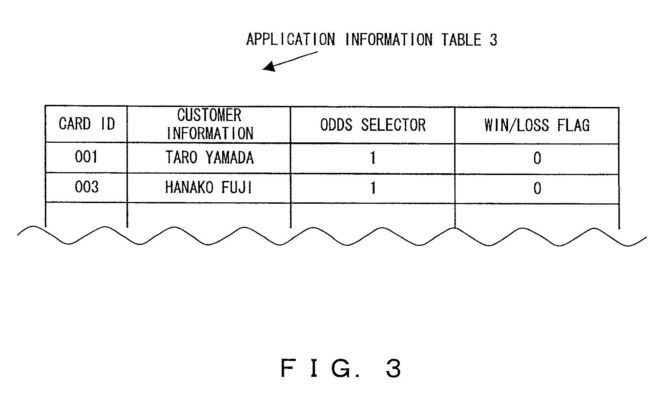

Fig. 3 shows an example data structure of the application information table.

The application information table has a "win/loss flag" indicating a win or a loss in addition to the same items, "card ID", "customer information", "odds selector" as those in the viewer information shown in Fig. 2.

Fig. 4 shows the item "odds selector" indicating a level value corresponding to its adjustment value changing the odds.

In Fig. 4, odds selectors "1", "2", "3", "4" and "5" represent probability ranges between 1/500 and 1/400, between 1/400 and 1/300, between 1/300 and 1/200, between 1/200 and 1/100 and between 1/100 and 1/10, respectively.

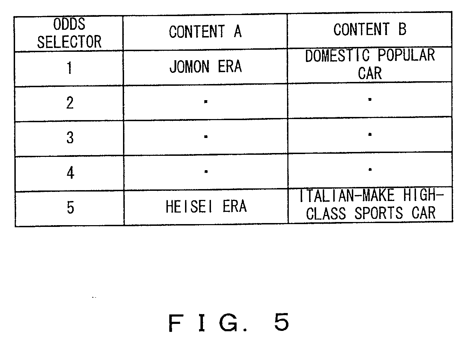

Fig. 5 shows the item "content No." indicating the type of a display form used when the odds are displayed using graphics.

In Fig. 5, in the case of content A, a process where the odds are improved as the odds selector changes from "Jomon era" of the lowest odds selector"1" up to "Heise" of the highest odds selector"5" can be easily recognized. In the case of content B, the odds selector changes from "domestic popular car" of the lowest odds selector"1" up to "Italian-make high-class sports car" of the highest odds selector"5".

In this case, a corresponding content is displayed based on the odds selector calculated using the current odds of a viewer.

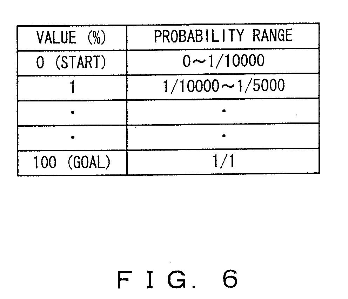

Fig. 6 shows a notification mechanism using a display interface.

In Fig. 6, if the odds range is between 0 and 1/10,000, a numeric value starts from 0% (start) and approaches 100% (goal) as the odds approach 1.

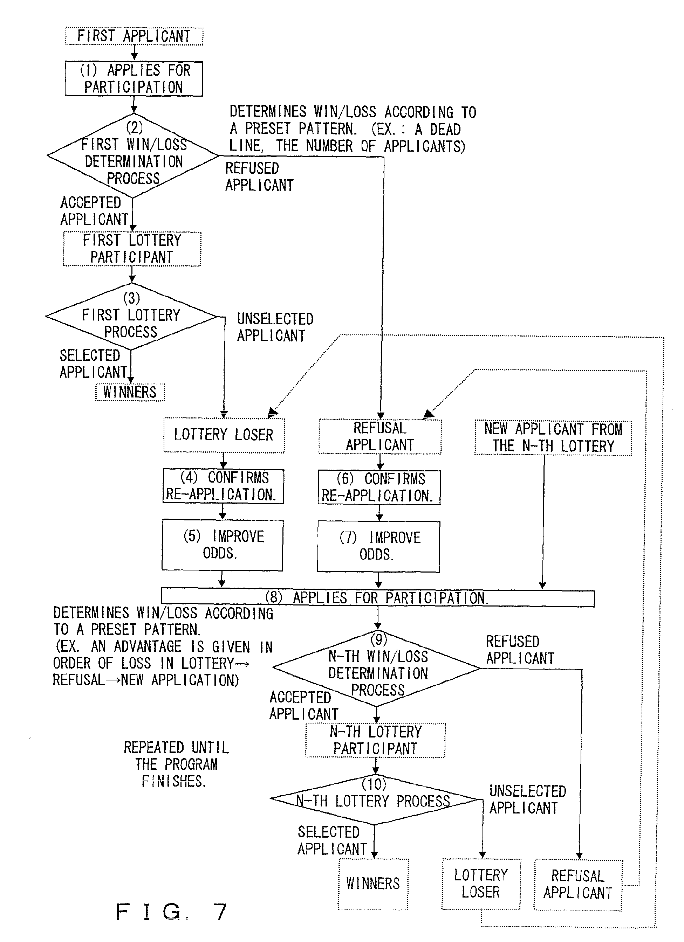

Fig. 7 is a flowchart showing the process of adjusting the odds.

In Fig. 7, (1) Each applicant for the first lottery applies for a quiz in a program using an interactive TV system or Internet TV system.

(2) A win/loss determination process is performed using a prescribed win/loss determination parameter, such as a dead line, the number of participants, etc.) .

(3) After applicants are accepted as the participants in the first lottery, the lottery is conducted and winners are selected. Winning is reported to the winning applicants and losing is reported to the refused applicants and losing applicants.

(4) and (6) The fact that an advantage is given to each of the refused applicants and losing applicants in a subsequent lottery is reported to each of the refused and losing applicants and it is confirmed whether he/she applies for the subsequent lottery.

(5) and (7) The odds of each of the re-applicants are improved.

(8) The order number N (integer of 2 or more) of the lottery is reported to new applicants for the N-th lottery, including the refused and losing applicants and their applications are received.

(9) A win/loss determination process is applied to the applicants for the N-th lottery.

(10) The lottery participants are selected and when applicants are replaced in the program (each of the applicants has completed his/her answer in a quiz program), a lottery is conducted again.

Processes (4) through (10) are repeated until the program finishes.

After a notice is given to each viewer, his/her reply is obtained within a specific time period. If there is no reply from him/her, his/her application is cancelled. This confirmation is sometimes displayed during a commercial.

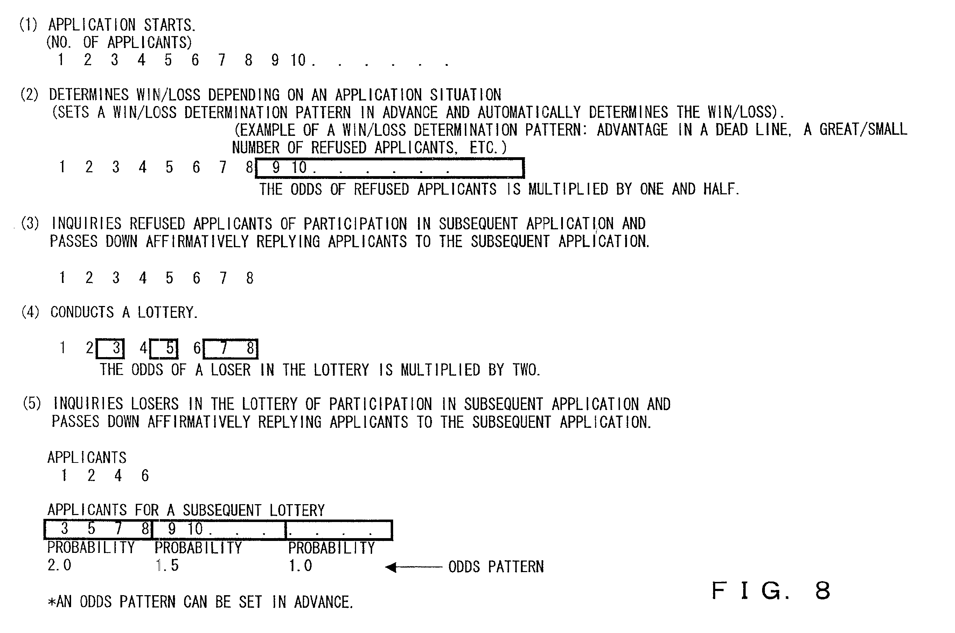

Fig. 8 shows a mechanism for improving the odds.

(1) The reception of applications is started and viewers, including viewers No. 1 through No. 10, apply for a program.

(2) Viewers No. 9 and after are selected as refused viewers by a preset line-drawing process. In other words, the remaining applicants are automatically selected as the first lottery participants. The odds in a subsequent lottery of applicants No. 9 and after is improved to, for example, one and half times the current odds.

(3) Viewers No. 1 through No. 8 are selected as the participants of the current lottery. Each of the refused viewers is inquired of its intent to apply for the subsequent lottery, and only a viewer that expresses his/her intent to participate continues to the subsequent lottery.

(4) The first lottery is conducted. The odds in the subsequent lottery for each of viewers No. 3, No. 5, No. 7 and No. 8 except for winning viewers No. 1. No. 2, No. 4 and No. 6 is improved to, for example, twice the current odds.

(5) Each of viewers No. 3, No. 5, No. 7 and No. 8 except for winning viewers No. 1. No. 2, No. 4 and No. 6 is inquired of its intent to apply for the subsequent lottery, and only a viewer that expresses his/her intent to participate continues to the subsequent lottery.

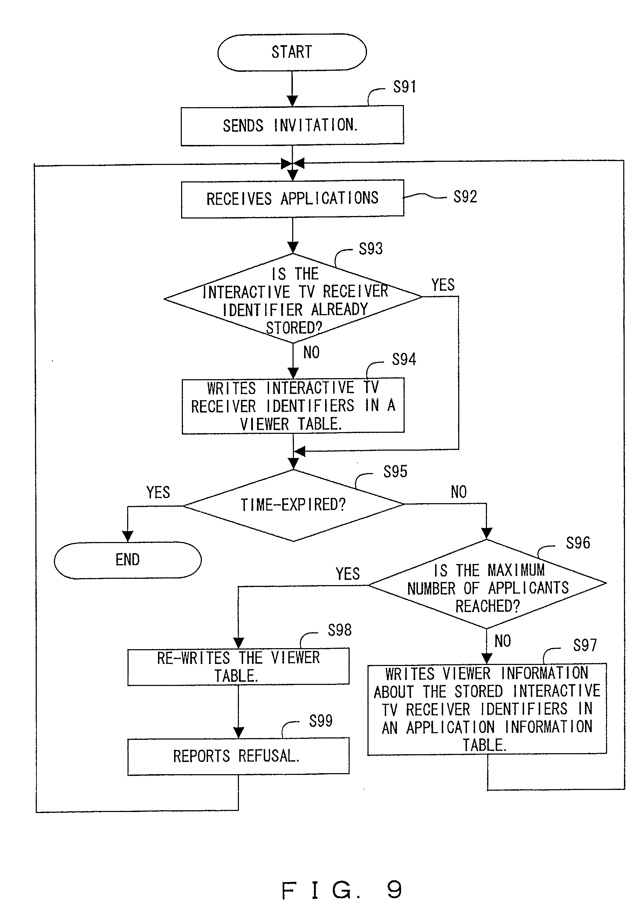

Fig. 9 is a flowchart showing the reception process of the interactive TV server device adopting the present invention.

First, in step S91, invitations to participate in a lottery to be conducted during a TV program are sent out to each interactive TV receiver 5 receiving the program through a TV broadcast communication network.

In step S92, applications indicating intent to participate in the lottery and its interactive TV receiver identifier are received from each interactive TV receiver 5 through a telephone line.

In step S93, it is judged whether each interactive TV receiver identifier received in step S92 is stored in a viewer table. The viewer table stores interactive TV receiver identifiers in accordance with their interactive TV receivers 5 receiving the program.

If in step S93 it is judged that the identifier is not stored (no in step S93), in step S94 the received interactive TV receiver identifier is stored in the viewer table.

After in step S94 the identifier is stored or if in step S93 it is judged that the identifier is already stored (yes in step S93) , instep S95 it is judged whether a prescribed time has elapsed since the invitations has been sent out.

If it is judged that the prescribed time has elapsed (yes in step S95) , this reception process is terminated. If the prescribed time has not elapsed (no in step S95) , in step S96 it is judged whether the maximum number of applications has been reached.

If in step S96 it is judged that the maximum has not been reached (no in step S96), in step S97, the viewer information about each interactive TV receiver identifier stored in the viewer table in step S94 is stored in an application information table (copied), and steps 92 and after are repeated.

If in step S96 it is judged that the maximum has not been reached (yes in step S96), in step S98 a new odds selector indicating the odds stored in the viewer table in accordance with the interactive TV receiver identifier stored in the viewer table in step S94 is written.

Then, in step S99, the refusal of participation in the lottery is reported to each interactive TV receiver corresponding to each interactive TV receiver identifier stored in the viewer table.

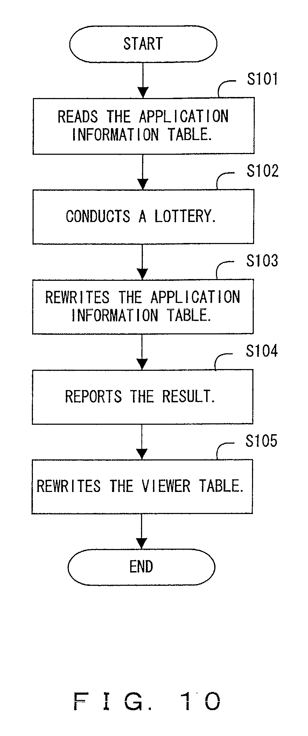

Fig. 10 is a flowchart showing the lottery process of the interactive TV server device adopting the present invention.

First, in step S101, an application information table is read. Specifically, viewer information about each interactive TV receiver identifier corresponding to each viewer that has applied for the lottery that has been copied in step S97 of Fig. 9 is read.

In step S102, a lottery process is performed.

Then, in step S103, the application information table is rewritten based on the result of the lottery conducted in step S102. Specifically, the odds selector of each winning applicant is restored to its initial value (for example, 1) and its winning/loss flag is set to winning (for example, 1). However, the odds selector of each losing applicant is improved and its win/loss flag is set to loss (for example, 0).

In step S104, winning is reported to the interactive TV receiver corresponding to the interactive TV receiver identifier of each winning applicant. However, loss is reported to the interactive TV receiver corresponding to the interactive TV receiver identifier of each losing applicant.

In step S105, the viewer table is rewritten based on the application information table rewritten in step S103.

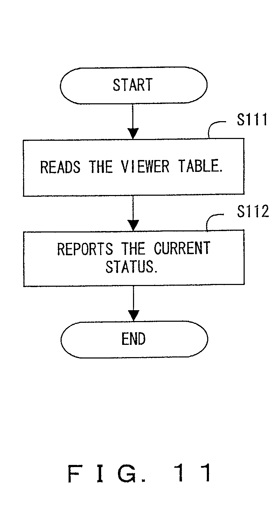

Fig. 11 is a flowchart showing the notification process of the interactive TV server device adopting the present invention.

First, in step S111, a viewer table is read and the viewer status corresponding to an interactive TV receiver identifier of each viewer making a notify request for its viewer status is obtained.

Then, in step S112, the viewer status obtained in step S111 is reported to the interactive TV receiver which made the request.

This notification process can be performed at an arbitrary time, if requested by a viewer.

Alternatively, the process can be performed within a specific time period or when a lottery finishes.

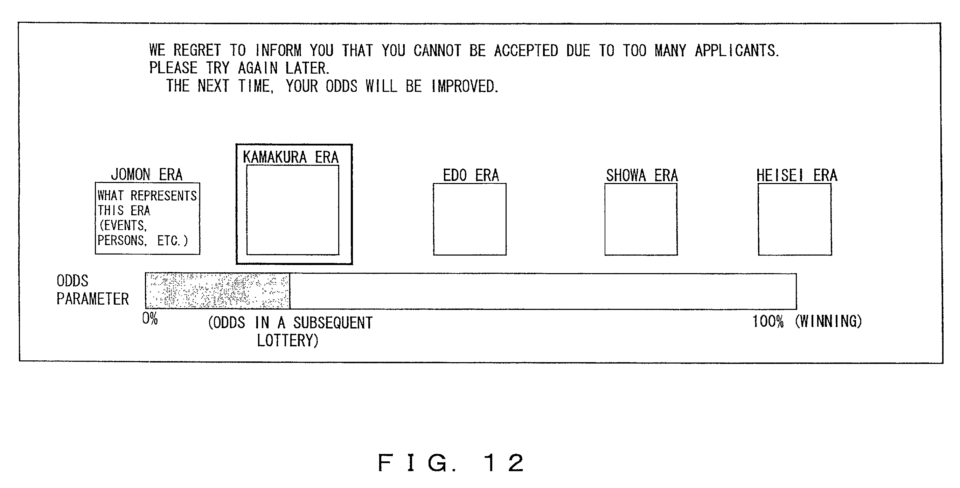

Figs. 12 through 17 show example displays of contents.

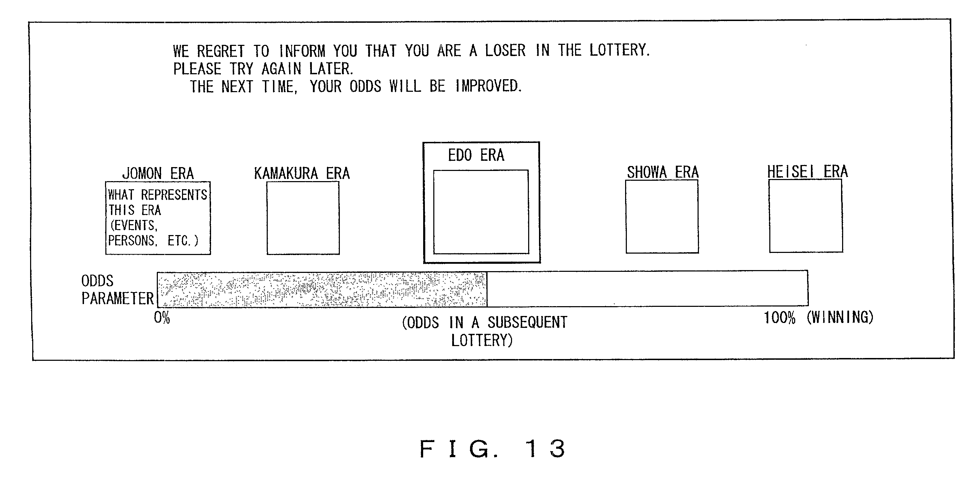

Fig. 12 shows an example display of a content (No. 1, when the odds are low) and Fig. 13 shows an example display of a content (No. 1, when the odds are improved) .

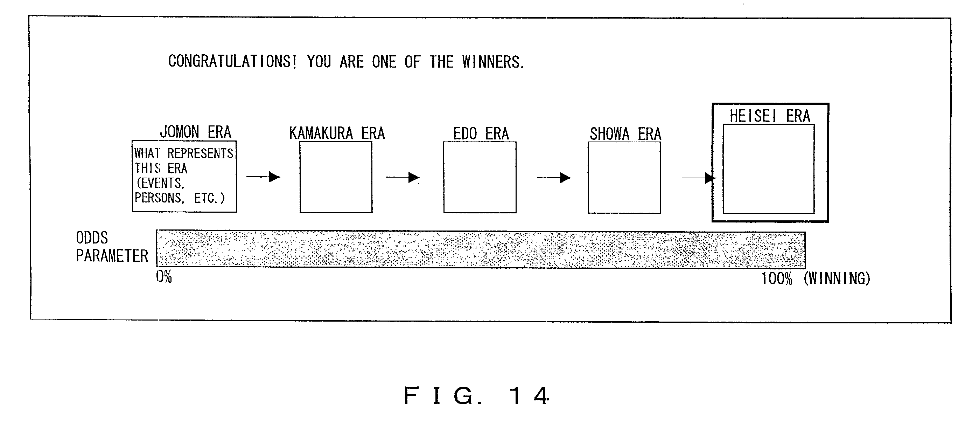

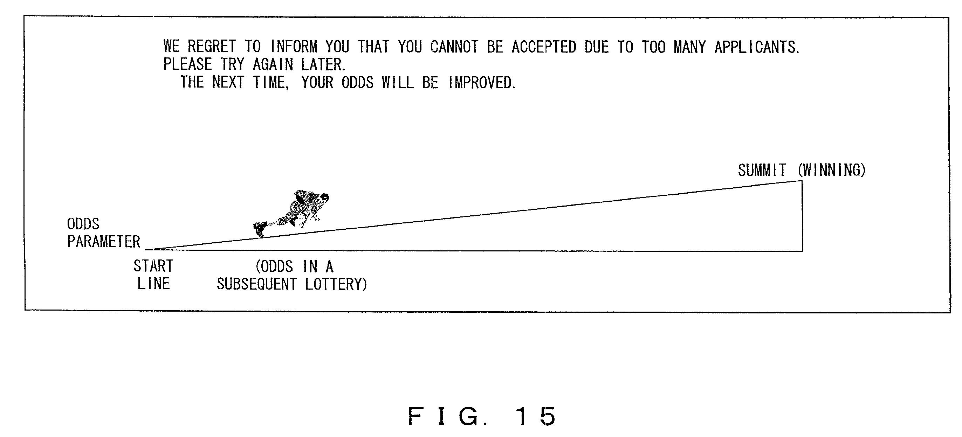

Fig. 14 shows an example display of a content (No. 1, when a participant win a lottery) and Fig. 15 shows an example display of a content (No. 2, when the odds are low).

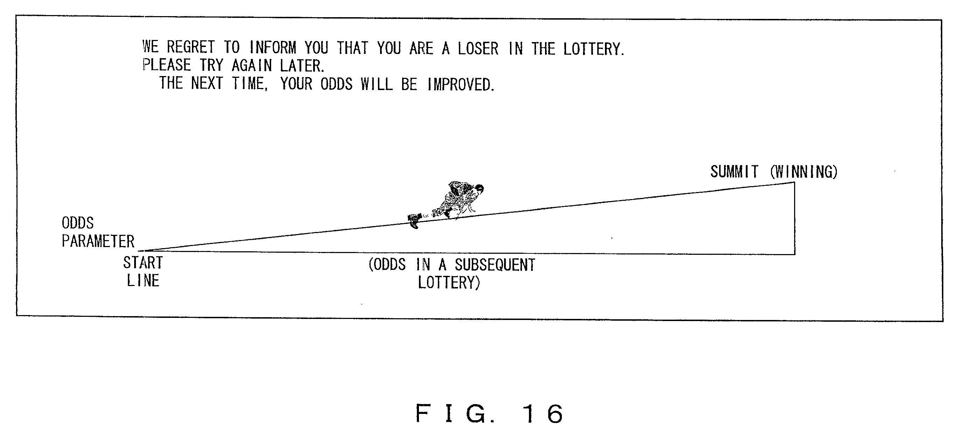

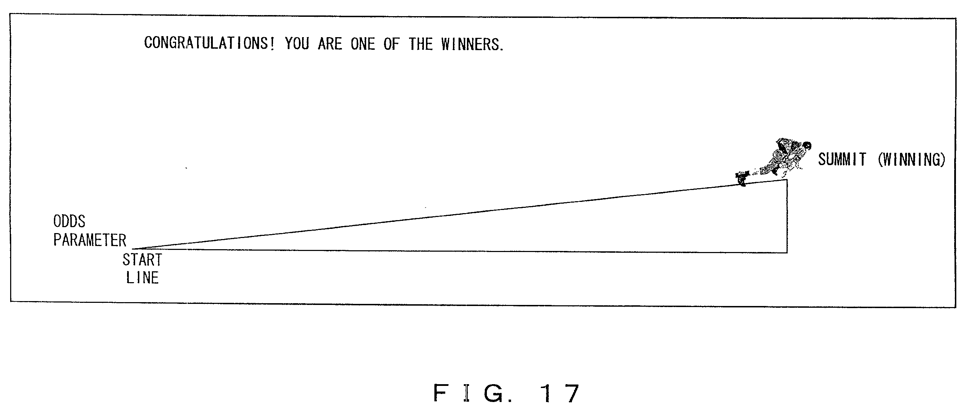

Fig. 16 shows an example display of a content (No. 2, when the odds are improved) and Fig. 17 shows an example display of a content (No. 2, when a participant wins a lottery).

By viewing these displays shown in Figs. 12 through 17, a viewer can easily feel how close he/she is to winning (goal) and his/her expectation (excitement) is enhanced accordingly.

The content can also be arranged in a quiz form (as to the name of an era in history, etc.) and his/her odds can be obtained only by answer the quiz. As a result, he/she works hard in order to obtain good odds. In this case, such an additional value can be added to the original purpose of notification.

By inserting program sponsor information in the content, it can also be utilized as a sponsor's commercial.

Although the preferred embodiments of the present invention have been so far described with reference to the drawings, the interactive TV server device adopting the present invention is not limited to those, and it can be a single device, a system/integrated device comprised of a plurality of devices or a system in which the process is performed through a network, such as LAN, WAN, etc., only if the function is realized.

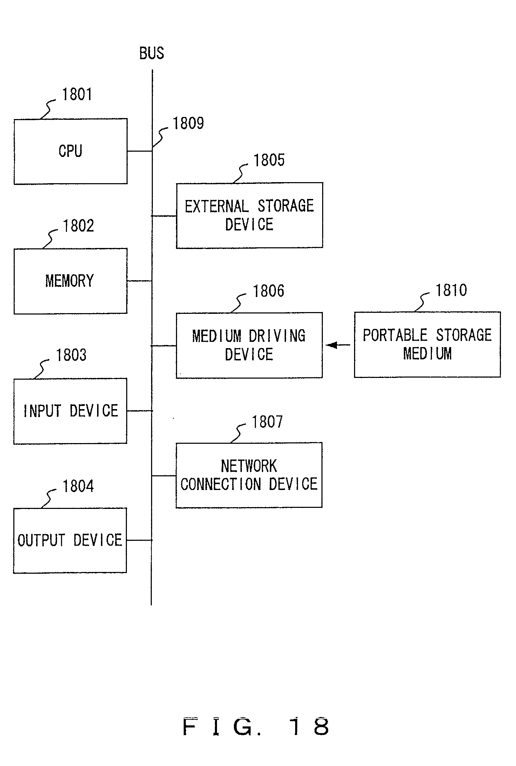

The function can also realized by a system comprised of a CPU 1801, a memory 1802, such as ROM, RAM, etc., an input device 1803, an output device 1804, an external storage device 1805, a medium driving device 1806, a portable storage medium 1810 and a network connection device 1807, which are all connected to one another by a bus 1809, as shown in Fig. 18. Specifically, the function can also be realized by providing the interactive TV server device with the memory 1802, such as ROM and RAM, external storage device 1805 and portable storage medium on which is recorded a software program code enabling a computer to realize the preferred embodiment systems and enabling the computer of the interactive TV server device to read and to execute the program code.

In this case, the program code itself read from a portable storage medium 1810 and the like realizes the new function of the present invention, and the portable storage medium 1810 storing the program code and the like constitutes the present invention accordingly.

For the portable storage media 1810 providing the program code, for example, a flexible disk, a hard disk, an optical disk, a magneto-optical disk, a CD-ROM, a CD-R, a DVD-ROM, a DVD-RAM, a magnetic tape, a non-volatile memory card, a ROM card and a variety of storage media recording the program code through the network connection device 1807, that is, a communication line, such as electronic mail, a personal computer communication, etc., can be used.

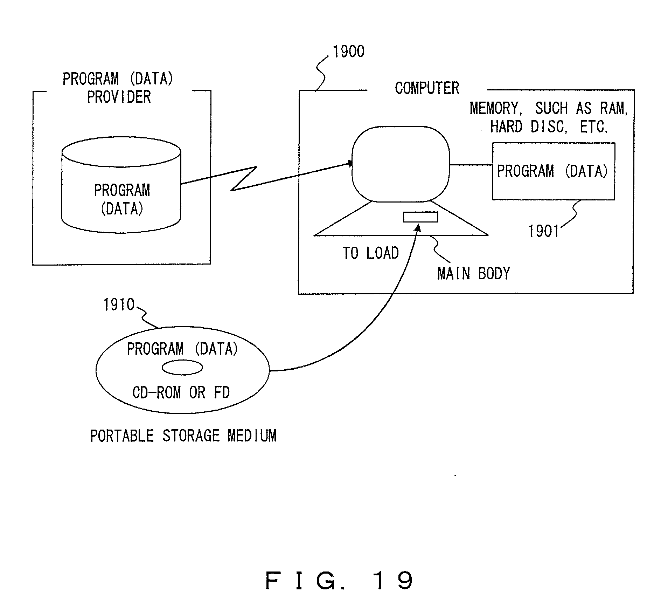

As shown in Fig. 19, by a computer 1900 reading and executing the program code read and stored by a memory 1901, the function of each preferred embodiment can also be realized. Alternatively, by an OS running in the computer 1900 and the like performing a part of the actual process or the entire process, the function of each preferred embodiment can also be realized.

By writing the program code read from a portable storage medium 1910 or a program (data) provided by a program (data) provider into a memory provided for a function extension board inserted in the computer 1900 or a function extension unit connected to the computer 1900, and then enabling a CPU provided for the function extension board or function extension unit and the like to perform a part of the process or the entire process, the function of each preferred embodiment can also be realized.

In other words, the present invention is not limited to the preferred embodiments described above and it can take a variety of configurations or forms as long as the subject matter of the present invention is maintained.

The features of the preferred embodiments described above are as follows.

As described above, according to the present invention, since the participation application of a viewer for a program can be made during a program in real time, anyone can lightheartedly participate in a program. As a result, the desire to participate in a program can be enhanced, and the audience rating of a program can be improved accordingly.

According to the present invention, since a receipt is reported to a viewer applying to participate in a program without fail, any viewer has a chance of winning and his/her interest in a program is also deepened. As a result, the audience rating of a program can be improved.

According to the present invention, since the receipt of an application and a winning notice are displayed to each viewer on the screen and their replies are obtained within a specific time period, the viewer is encouraged to continue viewing a program. As a result, the audience rating of a program can be improved.

According to the present invention, since the odds of a loser are improved for each lottery, the odds of a viewer from the beginning of a program becomes high. As a result, the audience rating of a program can be improved.

According to the present invention, since the improvement of the odds and the confirmation of participation in a subsequent lottery are displayed on the screen and their replies are obtained within a specific time period, a losing viewer is also encouraged to continue viewing a program. As a result, a viewer is induced to continue viewing a program from the beginning and the audience rating of a program can be improved accordingly.

According to the present invention, by collectively notifying a viewer of his/her interesting information or reporting I such a way that the viewer can feel how close he/she is to winning (goal), his/her expectation for program participation (winning) can be enhanced and interesting information can be provided to him/her. In this case, even if a viewer does not actually participate in a program, he/she can enjoy the program. As a result, his/her interest in a program can be further deepened and the audience rating of the program can be improved.

## Claims

1. A lottery method adopted in an interactive TV server device (1) broadcasting a TVprogram using a first network (4) and receiving information from interactive TV receivers (5) receiving the program using a second network (4), comprising:
sending an invitation to the interactive TV receivers (5) receiving the program, in which a lottery is being conducted during the program using the first network (4);
receiving applications indicating intent to participate in the lottery and interactive TV receiver (5) identifiers specifying the interactive TV receiver (5) from interactive TV receivers using the second network (4);
judging whether each received interactive TV receiver (5) identifier is stored in a viewer table (2) that stores interactive TV receiver identifiers in accordance with interactive TV receivers (5) receiving the program, and storing the received interactive TV receiver identifier if the identifier is not stored;
tracking how much time has elapsed since the invitations had been sent out;
counting the number of applications received after the invitations have been sent out; and
closing the lottery by storing viewer information about interactive TV receiver identifiers confirmed to be stored or stored in the viewer table (2) by the program reception confirmation unit in an application information table (3) before the counted elapsed time reaches the prescribed time limit and before the counted number of participants reaches the prescribed maximum, and refusing all applications after this time.

2. The lottery method according to claim 1, further comprising
notifying interactive TV receivers (5) corresponding to interactive TV receiver identifiers confirmed to be stored or stored in the viewer table (2) before the counted elapsed time reaches the prescribed time limit and after the counted number of participants reaches the prescribed maximum, that their applications have been refused.

3. The lottery method according to claim 1, further comprising:
conducting the lottery according to the viewer information stored in the application information table (3); and
notifying each interactive TV receiver (5) corresponding to the viewer information stored in the application information table (3), of a result of the conducted lottery.

4. The lottery method according to claim 2, further comprising:
conducting the lottery according to the viewer information stored in the application information table (3); and
notifying each interactive TV receiver (5) corresponding to the viewer information stored in the application information table (3), of a result of the conducted lottery.

5. The lottery method according to claim 1, further comprising
notifying each interactive TV receiver (5) corresponding to each interactive TV receiver identifier stored in the viewer information table (3), of a viewer status corresponding to the interactive TV receiver identifier.

6. The lottery method according to claim 2, further comprising
notifying each interactive TV receiver (5) corresponding to each interactive TV receiver identifier stored in the viewer information table (3), of a viewer status corresponding to the interactive TV receiver identifier.

7. The lottery method according to claim 3, further comprising
notifying each interactive TV receiver (5) corresponding to each interactive TV receiver identifier stored in the viewer information table (3), of a viewer status corresponding to the interactive TV receiver identifier.

8. The lottery method according to claim 1, wherein the applications can be received during the program in real time.

9. The lottery method according to claim 1, wherein when the lottery is closed, an odds selector indicating the odds confirmed to be stored or stored in the viewer table (2) corresponding to interactive TV receiver identifiers before the counted elapsed time reaches the prescribed time limit and after the counted number of participants reaches the prescribed maximum.

10. The lottery method according to claim 5, wherein a notice of viewer status is displayed based on an odds selector indicating the odds stored in the viewer table (2) .

11. A lottery program executed in an interactive TV server device (1) broadcasting a TV program using a first network (4) and receiving information from interactive TV receivers (5) receiving the program using a second network (4) in order to realize a process, the process comprising:
sending an invitation to interactive TV receivers (5) receiving a program, in which a lottery is being conducted, using the first network (4);
receiving applications indicating intent to participate in the lottery and interactive TV receiver identifiers specifying the interactive TV receivers (5) from the interactive TV receivers (5) using the second network (4);
judging whether each received interactive TV receiver (5) identifier is stored in a viewer table (2) that stores interactive TV receiver identifiers in accordance with interactive TV receivers (5) receiving the program, and storing the received interactive TV receiver identifier if the identifier is not stored;
tracking how much time has elapsed since the invitations had been sent out;
counting the number of applications received after the invitations have been sent out; and
closing the lottery by storing viewer information about interactive TV receiver identifiers confirmed to be stored or stored in the viewer table (2) in an application information table (3) before the counted elapsed time reaches the prescribed time limit and before the counted number of participants reaches the prescribed maximum, and refusing all applications after this time .

12. The lottery program according to claim 11, further comprising
displaying a notice of viewer status based on an odds selector indicating the odds stored in the viewer table (2).

13. An interactive TV server device (1) for broadcasting a TV program using a first network (4) and receiving information from interactive TV receivers (5) receiving the program using a second network (4), comprising:
a participant invitation notification unit (11) for sending an invitation to interactive TV receivers (5) receiving a program, in which a lottery is being conducted, using the first network (4);
a participation reception unit (12) for receiving applications indicating intent to participate in the lottery and interactive TV receiver identifiers specifying the interactive TV receiver (5) from interactive TV receivers (5) using the second network (4) ;
a program reception confirmation unit (13) for judging whether each received interactive TV receiver identifier is stored in a viewer table (2) that stores interactive TV receiver identifiers in accordance with interactive TV receivers (5) receiving the program, and storing the received interactive TV receiver identifier if the identifier is not stored;
a clock unit (14) for tracking how much time has elapsed since the invitations have been sent out;
a counter unit (15) for counting the number of applications received after the invitations have been sent out; and
a lottery closing unit (16) for closing the lottery by storing viewer information about interactive TV receiver identifiers confirmed to be stored or stored in the viewer table (2) by the program reception confirmation unit (13) in an application information table (3) before the elapsed time counted by the clock unit (14) reaches the prescribed time limit and before the number of participants counted by the counter unit (15) reaches the prescribed maximum, and refusing all applications after this time.

14. The interactive TV server device (1) according to claim 13, further comprising
a viewer status notification unit (10) for displaying a notice of viewer status based on an odds selector indicating the odds stored in the viewer table (2).
